# EUROPÄISCHE PATENTSCHRIFT

(11) **EP 1 810 952 B1**
(45) Veröffentlichungstag und Bekanntmachung des Hinweises auf die Patenterteilung: **17.08.2011**
(21) Anmeldenummer: 07000685.3
(22) Anmeldetag: 15.01.2007
(51) Int. Cl.: C02F 1/00, C02F 1/50

(54) **Anordnung zum Vitalisieren von Wasser**
Assembly for re-vitalising water
Agencement destiné à la vitalisation d'eau

(30) Priorität: 19.01.2006 DE 202006000837 U; 22.02.2006 DE 202006002954 U
(43) Veröffentlichungstag der Anmeldung: 25.07.2007
(60) Teilanmeldung: 10189018.4
(73) Patentinhaber: Weitz, Richard, 63639 Kleinwallstadt (DE)
(72) Erfinder: Weitz, Richard, 63639 Kleinwallstadt (DE)
(74) Vertreter: Stoffregen, Hans-Herbert

(56) Entgegenhaltungen:
- EP-A- 1 462 037
- EP-A- 1 607 529
- EP-A1- 0 517 365
- WO-A-01/64333
- DE-A1- 2 450 314
- DE-U1- 29 824 237
- JP-A- 2002 350 071
- US-A- 4 497 942
- US-A- 5 497 824
- US-A1- 2005 189 092
- US-B1- 6 752 923
- "Disinfectants and antiseptics" KIRK-OTHMER ENCYCLOPEDIA OF CHEMICAL TECHNOLOGY, 1979, Seiten 805-806, XP002431869

## Beschreibung

Die Erfindung bezieht sich auf eine Anordnung zum Vitalisieren von Wasser umfassend ein Gehäuse mit einer Wasserein- und -auslassöffnung, wobei im Strömungsweg zwischen Einlass- und Auslassöffnung eine Verwirbelungseinrichtung verläuft und der Strömungsweg zumindest abschnittsweise von einer Aufnahme begrenzt ist, in der ein das Wasser beeinflussendes Medium enthalten ist.

Eine entsprechende Vitalisierungsanordnung ist dem AT-U-7821 zu entnehmen. Die Anordnung wird unmittelbar einer Wasserentnahmestelle eines Verbrauchers nachgeschaltet und wird z. B. an einem Wasserhahn befestigt. Dabei werden durch die Vitalisierungsanordnung dem Wasser die natürlichen Eigenschaften wieder zugeführt, wie diese in der Natur vorliegen. Hierzu wird in der AT-U-7821 auf den Seiten 2 und 3 erläuternd Folgendes ausgeführt:

"Die moderne Wasserforschung befasst sich insbesondere mit den physikalischen Einflüssen wie Druck, Bewegung oder Strahlung, welchen Wässer auf ihrem Weg von der Quelle bis zum Wasserhahn im Haushalt ausgesetzt ist und mit den durch diese Einflüsse bewirkten, überwiegend nachteiligen Veränderungen der Wässer. Zur Erklärung, was unter vitalem Wasser zu verstehen ist, folgendes Beispiel: Bei einem Wasserfall stürzt Wasser infolge der Schwerkrafteinwirkung abwärts, und zwar zuerst als noch ungeteilter Wasserkörper, dann als zopfartiger Strom, wonach dann immer feinere, kleinteiligere Strukturen folgen, bedingt durch den Luftwiderstand einerseits und das Erdmagnetfeld andererseits. Das Erdmagnetfeld wirkt auf die Wassermoleküle, welche ja elektromagnetische Dipole darstellen, womit das Wasser selbst ein elektrisches Feld generiert. Zugleich stellt das Rauschen mit praktisch allen hörbaren und nicht hörbaren Frequenzen ein akustisches Phänomen strömenden Wassers dar. Am Fuße des Wasserfalls trifft das Wasser auf den meist felsigen Untergrund, aus welchem es z. B. Mineralien löst. Zusätzlich beeinflussen die Eigenschwingungen der Mineralien der Felsen, wie z. B. Quarzkristalle, die Struktur des Wassers. Das derart energetisch aufgeladene und mit den ihm auf natürliche Weise aufgeprägten Informationen ausgestattete Wasser gelangt, ausgehend von einer Quellfassung über Rohrleitungen, Schieber, Ventile, Speicherkammern, Desinfektionsstufen und dgl. letztlich in die Wasserentnahmestellen bei den Verbrauchern.

Auf dem meist langen Weg von der Quelle zum Verbraucher wird das Wasser der ihm von der Natur aufgeprägten Inhalte an Information und Energie weitgehend beraubt und es kommt zur Umwandlung in weniger günstige oder schädliche Informations- und Energieformen. Heute ist es weitgehend anerkannt, dass derartiges Wasser Physis und Psyche des Menschen ungünstig beeinflusst, und so haben es sich viele Forscher zum Ziel gesetzt, dem Wasser jene Information und Lebendigkeit zurückzugeben, welches es ursprünglich von Natur aus mitbekommen hat."

Die vorbekannte Vitalisierungsanordnung ist jedoch konstruktiv aufwändig und bietet insbesondere aufgrund eines integrierten Aktivkohlefilters und dem nur geringen Kontakt mit einem rohrförmigen Vitalisierstab als die das Wasser mitbeeinflussende Medium enthaltende Aufnahme nicht die gewünschte Vitalisierung.

Zur Aufbereitung von Wasser ist nach der DE-A-100 00 345 vorgesehen, dass das Wasser durch im Schnitt sechseckige Leitungen geführt wird, die einen Behältermantel durchströmen, in dem Informationen enthalten sind, die dem Wasser vermittelt werden sollen.

Bei einer Wasseraufbereitungsanlage nach der DE-U-203 09 556 wird Wasser durch ein Gehäuse geführt, wobei sich im Strömungsweg Halbedelsteine befinden, die energetisiert werden können.

Um einen Informationskörper von Wasser umströmen zu lassen, sieht die DE-U-202 03 596 ein Gehäuse mit einer Strömungsscheibe vor, durch die dem Wasser eine spiralförmig verlaufende Strömung aufgezwungen wird.

Steine sowie eine aus Ton bestehende Wendel befinden sich in einem Gehäuse zur Wasseraufbereitung nach dem DE-U-201 16 136. Dabei ist die Wendel selbst rechtsdrehend ausgebildet und als Einsatz in dem Gehäuse anordbar.

Die DE-U-93 16 975 hat ein Gerät zum Aufbereiten von Wasser zum Gegenstand. Das Wasser durchströmt ein Gehäuse, in dem Edelsteinkristalle vorgesehen sein können. Ferner ist ein Keramikrohr vorhanden, durch das das zu behandelnde Wasser strömt.

Der EP-A-1 607 529 ist ein Wasserbehandlungsgerät zu entnehmen, mittels dessen Wasser durch eine Wasserbehandlungskammer geführt wird, die durch ein Trennelement unterteilt ist. In der Wasserbehandlungskammer kann sich z. B. eine Schüttung aus Edelsteinen befinden.

Die EP-A-1 462 037 bezieht sich auf ein Gefäß, in dessen Gehäuse Kavitäten vorhanden sind, in denen Medien mit besonderen Eigenschaften eingebracht sind, um Wasser zu beeinflussen.

Gegenstand der WO-A-01/64333 ist ein Rohrreaktor, mit dem verschiedene Medien vermischt werden. Hierzu weist der Reaktor Verwirbelungszonen auf.

Um Wasser zu beeinflussen, wird in der US-B-6,752,923 Wasser eine schraubenförmige Fließrichtung aufgezwungen. Hierzu durchströmt das Wasser ein Rohr mit entsprechenden Umlenkeinrichtungen. Das Rohr selbst ist von Magneten umgeben.

Die Literaturstelle XP-002431869 vermittelt die Lehre, dass Silber Wirkungen auf Wasser ausübt.

Um Wasser zu veredeln, sieht die DE-U-298 24 237 ein von einem Doppelmantel umgebendes Rohr vor, in dem sich Einbauten finden, um das durchströmende Wasser in eine Rechtsdrehung zu versetzen. In dem äußeren Doppelmantel können Mineralien angeordnet werden.

Der vorliegenden Erfindung liegt die Aufgabe zu Grunde, eine Anordnung der eingangs genannten Art so weiterzubilden, dass mit konstruktiv einfachen Maßnahmen im hinreichenden Umfang eine Vitalisierung von Wasser möglich ist, wobei das die Anordnung durchströmende Wasser im hinreichenden Umfang mit dem das Wasser beeinflussenden Medium bzw. dessen Begrenzung in Kontakt gelangt. Auch soll eine gute Verwirbelung ermöglicht werden.

Zur Lösung der Aufgabe sieht die Erfindung im Wesentlichen vor, dass das Gehäuse doppelwandig mit Außen- und Innenwandung ausgebildet ist, dass die Außen- und Innenwandung eine erste geschlossene Aufnahme für das Medium begrenzen, dass die Innenwandung den Strömungsweg begrenzt, dass die Innenwandung koaxial zu einer eine geschlossene Aufnahme für das Medium bildenden zweiten rohrförmigen Aufnahme in Form eines ersten Innenrohrs verläuft, das umfangs- und bodenseitig zu der Innenwandung beabstandet verläuft, dass von dem ersten Innenrohr radial abragende flächige Trennelemente zur Trennung des zwischen dem ersten Innenrohr und dem zweiten Innenrohr verlaufenden Zwischenraums in zwei Teilräume ausgehen, von denen einer mit der Einlassöffnung und der andere mit der Auslassöffnung verbunden ist, dass die Einlass- und die Auslassöffnung von einer Muffe oder einem Rohrabschnitt begrenzt ist, deren oder dessen Längsachse senkrecht Längsachse des ersten Innenrohrs schneidet, dass die Teilräume im entfernt zu der Ein- und Auslassöffnung verlaufenden Bodenbereich des Gehäuses miteinander verbunden sind und dass von dem ersten Innenrohr sich in die jeweiligen Teilräume erstreckende die Verwirbelungseinrichtung bildende Vorsprünge ausgehen.

Erfindungsgemäß wird das Gehäuse der Vitalisierungsanordnung unterteilt, um ungeachtet einer kompakten Bauweise das Wasser einen relativ langen Weg durch das Gehäuse strömen zu lassen, wobei eine hinreichende Verwirbelung erfolgt. Ferner wird der Strömungsweg des Wassers von Wandungen begrenzt, die ihrerseits das das Wasser beeinflussende Medium begrenzen, so dass das Medium im hinreichenden Umfang das vorbeiströmende Wasser beeinflussen kann. Somit werden im Vergleich zu der bekannten Vitalisierungsanordnung die Verweilzeit in dem Gehäuse und der Kontakt mit den Begrenzungen der das Medium aufnehmenden Aufnahmen vergrößert.

Bei den von der als erstes Innenrohr ausgebildeten zweiten Aufnahme sich in die jeweiligen Teilräume erstreckenden die Verwirbelungseinrichtung bildenden Vorsprüngen kann es sich um Edelstahlelemente handeln, die unter verschiedenen Winkeln von dem ersten, also innersten Rohr ausgehen und insbesondere mit diesem durch Schweißen verbunden sind. Es erfolgt eine Verwirbelung des durchfließenden Wassers mit der Folge, dass natürliche Bedingungen für das Wasser mit konstruktiv einfachen Maßnahmen realisiert werden.

Um sicherzustellen, dass das Wasser nicht unmittelbar von der Ein- zur Auslassöffnung strömen kann, sondern über die gesamte Länge der Teilräume entlang des ersten Innenrohrs, ist vorgesehen, dass von dem ersten Rohr die radial abragenden flächigen Trennelemente wie Trennbleche ausgehen, die sich über die gesamte Länge des ersten Innenrohrs erstrecken. Dabei enden die Trennelemente beabstandet zur Bodenfläche der Innenwandung vorzugsweise im Bereich bodenseitiger Stirnfläche des ersten Innenrohrs.

Die Innenwandung selbst wird nach einem weiteren Vorschlag der Erfindung durch ein zweites Innenrohr mit geschlossenen Stirnflächen gebildet, das das erste Innenrohr umfangsseitig koaxial umgibt.

Die Außenwandung wird von einem eine Zylinder- oder Mehrkantsäulengeometrie aufweisenden Außenmantel gebildet, der boden- und kopfseitig geschlossen ist. Als Mehrkantsäulengeometrie kommt insbesondere eine im Schnitt Sechskantsäulengeometrie in Betracht. Unabhängig hiervon sollten dabei kopfseitige Stirnfläche des zweiten Innenrohrs und kopfseitige Fläche des Außenmantels bzw. der Außenwandung flächig aufeinanderliegen und miteinander verbunden sein. Des Weiteren sollte das erste Innenrohr kopfseitig durch kopfseitige Stirnfläche bzw. -wandung des zweiten Innenrohrs verschlossen sein.

Die Ein- und Auslassöffnung ist jeweils durch einen Rohrabschnitt gebildet, der den Zwischenraum zwischen Außenmantel und zweitem Innenrohr durchsetzt und gegenüber diesen abgedichtet ist. Somit strömt das Wasser unmittelbar vom Äußeren des Gehäuses in den Zwischenraum zwischen dem ersten und dem zweiten Innenrohr.

Um die ersten und zweiten Aufnahmen, also das erste Innenrohr sowie den Zwischenraum zwischen dem zweiten Innenrohr und dem Außenmantel mit dem das Wasser beeinflussenden Medium zu befüllen, sind verschließbare Öffnungen vorgesehen, die in den kopfseitigen Stirnbereichen verlaufen. Die Öffnungen selbst können nach Befüllung der Aufnahmen durch Nieten verschlossen werden.

Bei dem Medium kann es sich insbesondere um hochwertige Quellwässer handeln.

Ist bevorzugterweise vorgesehen, dass sämtliche Elemente, d. h. der Außenmantel, das erste und das zweite Innenrohr, die von dem Innenrohr ausgehenden Vorsprünge, die die Ein- und Auslassöffnungen bildenden Rohrabschnitte, die Trennelemente sowie die Nieten aus Edelstahl bestehen, so kommen andere geeignete Materialien wie z. B. Keramik und/oder Glas gleichfalls in Frage. Dabei hängt die Wahl des Materials bevorzugterweise von den dem Wasser zu vermittelnden Eigenschaften ab.

Unabhängig hiervon ist vorgesehen, dass mit dem Wasser in Berührung gelangende Bereiche der Vorrichtung mit einem desinfizierenden Material versehen wie beschichtet sind oder ein solches Material aufweisen. Insbesondere sollten die mit dem Wasser in Berührung gelangenden Bereiche mit Silber oder einem Silber enthaltenden Material versehen wie beschichtet sein oder Silber oder Silber enthaltendes Material aufweisen.

Die Dimensionierung des Gehäuses und der Einbauten in diesem hängt von der Menge des durchströmenden Wassers ab. Das Gehäuse bzw. die Außenummantelung sollte jedoch derart ausgelegt sein, dass ein Wasserdruck bis 20 bar im Temperaturbereich zwischen +1°C und 95°C beherrschbar ist.

Querschnitte der Eintritts- und Austrittsöffnungen sowie Querschnittsänderungen, die durch die Verwirbelungseinrichtung bzw. Trennelemente bewirkt werden, sollten derart dimensioniert sein, dass bei maximalem Durchfluss ein maximaler Druckverlust von 0,4 bar auftritt.

Das Gerät ist stromlos und ohne Zusätze betreibbar, so dass eine Service- und Wartungsfreiheit gegeben ist.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: einen Längsschnitt durch eine erfindungsgemäße Ausführungsform eines Vitalisierungsgerätes,
- Fig. 2: einen Schnitt entlang Linie II-II in Fig. 1.

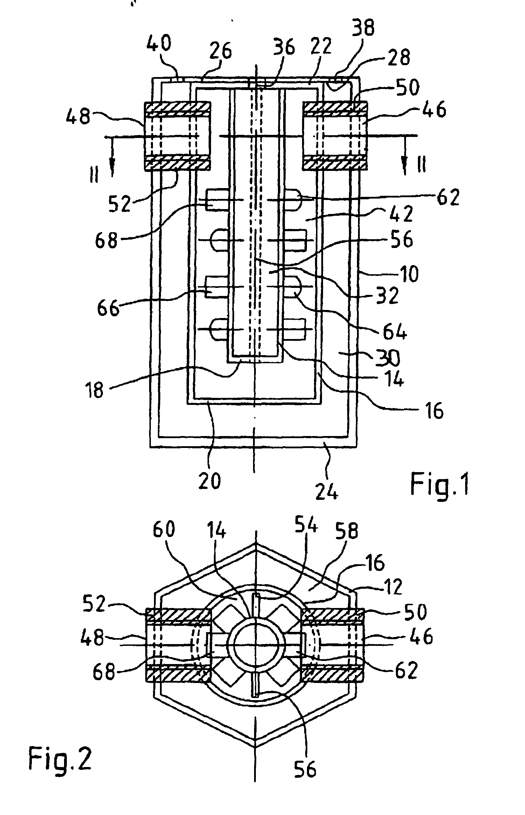

In Fig. 1 ist rein schematisch eine der erfindungsgemäßen Lehre folgende Anordnung zum Vitalisieren von Wasser dargestellt, durch die das Wasser weitgehend seine ursprünglichen Eigenschaften wiedergewinnen soll. Die Anordnung umfasst ein Gehäuse 10, das aus einem im Ausführungsbeispiel eine Sechskantsäulenform aufweisenden Außenmantel 12, einem ersten Innenrohr 14 sowie einem zweiten Innenrohr 16 besteht. Das zweite Innenrohr 16 umgibt koaxial das erste Innenrohr 14. Das erste und zweite Innenrohr 14, 16 sind bodenseitig durch Stirnflächen bildende bodenseitige Stirnwandungen 18, 20 verschlossen. Das zweite Innenrohr 16 weist des Weiteren eine kopfseitige Stirnwandung 22 auf, über die im Ausführungsbeispiel das erste Innenrohr 14 verschlossen ist.

Der Außenmantel 12 weist gleichfalls eine Bodenwandung 24 sowie eine Kopfwandung 26 auf, wobei die Kopfwandung 22 des zweiten Innenrohrs 16 flächig an der Innenfläche 28 der Kopfwandung 26 der Außenummantelung 12 anliegt und mit dieser verbunden ist. Durch die diesbezügliche Konstruktion ergeben sich zwei Aufnahmen 30, 32 für ein Medium, das ein das Gehäuse 10 durchströmendes Wasser beeinflusst.

Die erste Aufnahme 30 wird durch den Zwischenraum zwischen Außenummantelung 12 und dem zweiten Innenrohr 16 gebildet. Die zweite Aufnahme 32 ist der Innenraum des ersten Innenrohrs 14.

Sowohl die erste als auch die zweite Aufnahme 30, 32 sind über in den Kopfwandungen 22, 24 verlaufende Öffnungen 36, 38, 40 zugänglich, die nach dem Befüllen mit dem das Wasser beeinflussenden Medium durch Niete verschließbar sind.

Der zwischen dem ersten und zweiten Innenrohr 14, 16 verlaufende Zwischenraum 42 wird von dem zu vitalisierenden Wasser durchströmt. Hierzu sind eine Einlassöffnung 46 und eine Auslassöffnung 48 vorgesehen, die durch Muffen oder Rohrabschnitte 50, 52 begrenzt werden, die die Außenummantelung 12 und das zweite Innenrohr 16 durchsetzen und mit diesen flüssigkeitsdicht verbunden sind. Somit kann die zu vitalisierende Flüssigkeit über die Einlassöffnung 46 in den Zwischenraum 42 und von diesem über die Auslassöffnung 48 strömen. Dabei kann die Einlassöffnung 46, d. h. die Muffe bzw. der Rohrabschnitt 50 mit einem Wasserhahn verbunden sein, wohingegen die Auslassöffnung 48 in einer Flüssigkeitsentnahme mündet.

Damit die Flüssigkeit nicht unmittelbar von der Einlass- zur Auslassöffnung 46, 48 strömen kann, ragen von dem ersten Innenrohr 14 flächige Trennelemente 54, 56 ab, die den Zwischenraum 42 über seine Höhe in zwei Teilräume 58, 60 unterteilen. Dabei können die Trennelemente 54, 56 bis zur Innenfläche des zweiten Innenrohrs 36 - oder wie dies der Fig. 2 zu entnehmen ist - in kurzem Abstand zu dieser enden. Unabhängig hiervon bewirken die Trennelemente 54, 56, dass das über die Einlassöffnung 46 zuströmende Wasser im Wesentlichen über die Länge des ersten Innenrohrs 14 bis zu dessen Bodenwandung strömt, um sodann in den zweiten Teilraum 46 zu gelangen und über den Auslass 48 hinauszufließen.

Damit beim Durchströmen der Teilräume 58, 60 eine hinreichende Verwirbelung des Wassers erfolgt, ragen von dem ersten Innenrohr 14 Verwirbelungselemente wie Vorsprünge 62, 64, 66, 68 ab, die unter verschiedenen Winkeln von dem ersten Innenrohr 14 ausgehen und mit diesem vorzugsweise durch Schweißen verbunden sind. Somit bilden die Vorsprünge 62, 64, 66, 68 Verwirbelungselemente, die mit zu einer Vitalisierung des durchströmenden Wassers führen. Zwischen den Bodenwandungen 18, 20 des ersten und zweiten Innenrohrs 14, 16 strömt das Wasser vorzugsweise ungehindert.

Die Vorsprünge 62, 64, 66, 68 und der Querschnitt der Teilräume 58, 60 ist derart auf die Einlass- und Auslassöffnungen 46, 48 ausgelegt, dass bei maximalem Durchfluss ein maximaler Druckverlust von 0,4 bar auftritt.

Die Außenummantelung 12 sowie das erste und zweite Innenrohr 14,16, die Muffen 50, 52, die Vorsprünge 62, 64, 66, 68, die Trennelemente 54, 56 und die nicht dargestellten Nieten zum Verschließen der Öffnungen 36, 38, 40 bestehen bevorzugterweise aus Edelstahl. Andere geeignete Materialien, die zu einer gewünschten Beeinflussung des durch das Gehäuse 10 strömenden Wassers bzw. die erforderliche Neutralität bieten, sind gleichfalls möglich. Keramik oder Glas sind beispielhaft zu nennen.

Des Weiteren zeichnet sich die Erfindung dadurch aus, dass zumindest die Bereiche des Vitalisierungsgerätes, die mit dem zu vitalisierenden Wasser in Kontakt gelangen, magnetisierbar sind. Dies kann durch eine Beschichtung oder das Material des Innen- und Außenrohrs 14, 16 und der Vorsprünge 62, 64, 66, 68 gemäß Fig. 1 und 2 realisiert werden. Auch können die entsprechenden Abschnitte zum Beispiel aus Edelstahl mit Eisenanteilen bestehen.

Das Vitalisierungsgerät selbst kann unmittelbar an einen Wasseranschluss wie Wasserhahn angebracht wie angeschraubt werden. Ein Anordnen in einem Wasserkreislauf ist gleichfalls möglich, um nur einige Beispiele zu nennen.

Das erfindungsgemäße Vitalisierungsgerät kann insbesondere auch in geschlossene Wasserkreisläufe wie Kühlsysteme oder Heizungsanlagen eingebaut werden.

## Patentansprüche

1. Anordnung zum Vitalisieren von durch die Anordnung strömendem Wasser umfassend ein Gehäuse (10) mit einer Wasserein- und -auslassöffnung (46, 48), wobei im Strömungsweg zwischen Einlass- und Auslassöffnung eine Verwirbelungseinrichtung (62, 64, 66, 68) verläuft und der Strömungsweg zumindest abschnittsweise von einer Aufnahme (30, 32) begrenzt ist, in der ein das Wasser beeinflussendes Medium enthalten ist,
**dadurch gekennzeichnet,**
**dass** das Gehäuse (10) doppelwandig mit Außen- und Innenwandung ausgebildet ist, dass die Außen- und Innenwandung eine erste geschlossene Aufnahme (30) für das Medium begrenzen, dass die Innenwandung den Strömungsweg begrenzt, dass die Innenwandung koaxial zu einer eine geschlossene Aufnahme (32) für das Medium bildenden zweiten rohrförmigen Aufnahme in Form eines ersten Innenrohrs (14) verläuft, das umfangs- und bodenseitig zu der Innenwandung beabstandet verläuft, dass von dem ersten Innenrohr (14) radial abragende flächige Trennelemente (54, 56) zur Trennung des zwischen dem ersten Innenrohr (14) und dem zweiten Innenrohr (16) verlaufenden Zwischenraums in zwei Teilräume (58, 60) ausgehen, von denen einer mit der Einlassöffnung (46) und der andere mit der Auslassöffnung (48) verbunden ist, dass die Einlass- und die Auslassöffnung von einer Muffe oder einem Rohrabschnitt (50, 52) begrenzt ist, deren oder dessen Längsachse senkrecht Längsachse des ersten Innenrohrs schneidet, dass die Teilräume im entfernt zu der Ein- und Auslassöffnung verlaufenden Bodenbereich des Gehäuses miteinander verbunden sind und dass von dem ersten Innenrohr (14) sich in die jeweiligen Teilräume (58, 60) erstreckende die Verwirbelungseinrichtung bildende Vorsprünge (62, 64, 66, 68) ausgehen.

2. Anordnung nach Anspruch 1,
**dadurch gekennzeichnet,**
**dass** die als Außenmantel des Gehäuses (10) ausgebildete und eine Zylinder- oder Mehrkantsäulengeometrie aufweisende AuBenwandung (12) in ihrem jeweiligen Stirnbereich von einer Kopfwandung (26) bzw. einer Bodenwandung (24) begrenzt ist, dass die Innenwandung durch ein zweites Innenrohr (16) mit geschlossener Bodenwandung (20) gebildet ist und dass die Kopfwandung (26) der Außenwandung (12) und kopfseitige Stirnwandung (22) des zweiten Innenrohrs (16) flächig aufeinander liegen und miteinander verbunden sind.

3. Anordnung nach Anspruch 1,
**dadurch gekennzeichnet,**
**dass** die Wasserein- bzw. -auslassöffnung (46, 48) jeweils durch einen Rohrabschnitt bzw. eine Muffe (50, 52) gebildet ist, der bzw. die gegenüber zwischen der Außenummantelung (12) und dem zweiten Innenrohr (16) verlaufendem die erste Aufnahme (30) bildendem Zwischenraum abgedichtet ist

4. Anordnung nach Anspruch 1,
**dadurch gekennzeichnet,**
**dass**
sich die Trennelemente (54, 56) über die gesamte Länge des ersten Innenrohrs (14) erstrecken und beabstandet zur Bodenwandung (20) des zweiten Innenrohrs (16) enden.

5. Anordnung nach zumindest Anspruch 1,
**dadurch gekennzeichnet,**
**dass** jeweiliger bodenseitiger Stirnrand der Trennelemente (54, 56) in Höhe Bodenwandung (18) des ersten Innenrohrs (14) endet und dass insbesondere die Trennelemente (54, 56) mit ihren Längsrändern beabstandet zur Innenfläche des zweiten Innenrohrs (16) verlaufen.

6. Anordnung nach zumindest Anspruch 2,
**dadurch gekennzeichnet,**
**dass** die erste und die zweite Aufnahme (30, 32) über in den Kopfwandungen (22, 26) von dem Außenmantel (12) bzw. dem zweiten Innenrohr (16) ausgehende Öffnungen (36, 38, 40) befüllbar sind, die ihrerseits über vorzugsweise Nieten verschließbar sind.

7. Anordnung nach zumindest Anspruch 1,
**dadurch gekennzeichnet,**
**dass** der Außenmantel (12), das erste und das zweite Innenrohr (14, 16), die von dem Innenrohr (62, 64, 66, 68) ausgehenden Vorsprünge, die die Einlass- und Auslassöffnung begrenzenden Rohrabschnitte (50, 52), die Trennelemente (54, 56) und/oder die Nieten aus Edelstahl, Keramik und/oder Glas bestehen.

8. Anordnung nach zumindest Anspruch 1,
**dadurch gekennzeichnet,**
**dass** mit dem Wasser in Berührung gelangende Bereiche der Vorrichtung (10) mit einem desinfizierenden Material versehen wie beschichtet sind oder ein solches Material aufweisen, insbesondere die mit dem Wasser in Berührung gelangenden Bereiche der Vorrichtung (10) mit Silber oder einem Silber enthaltenden Material versehen wie beschichtet sind oder Silber oder Silber enthaltendes Material aufweisen.

9. Anordnung nach zumindest Anspruch 1,
**dadurch gekennzeichnet,**
**dass** mit dem Wasser in Berührung gelangende Bereiche der Vorrichtung (10) magnetisierbar sind, insbesondere die mit dem Wasser in Berührung gelangenden Bereiche der Vorrichtung aus magnetisierbarem Material bestehen oder mit einem solchen versehen sind.

## Claims

1. Arrangement for vitalising water flowing through said arrangement comprising a casing (10) with a water inlet and outlet (46, 48), whereby a turbulence means (62, 64, 66, 68) extends in the flow path between inlet and outlet, and the flow path is at least in sections limited by a receptacle (30, 32) containing a medium influencing the water,
**characterized in**
**that** the casing (10, 110) is designed double-walled with outer and inner wall,
**that** the outer and inner wall limit a first closed receptacle (30) for the medium, that the inner wall limits the flow path,
**that** the inner wall extends coaxially to a second tubular receptacle, that forms a closed receptacle for the medium and is in form of a first inner tube (14) running at the circumferential and bottom side spaced to the inner wall,
**that** from the first inner tube (14) originate plane separating elements (54, 56) projecting radially for separating into two compartments (58, 60)the space extending between the first inner tube (14) and the second inner tube (16), one of the compartments being connected to the inlet (46) and the other one to the outlet (48), that the inlet und the outlet are limited by a bushing or a tube section (50, 52), the longitudinal axis of which intersects perpendicularly longitudinal axis of the first inner tube,
**that** the compartments are connected with each other in the bottom region running at a distance to the inlet and outlet, and
**that** from the first inner tube (14) originate projections (62, 64, 66, 68) extending into the respective compartments (58, 60) and forming the turbulence means.

2. Arrangement according to claim 1,
**characterized in**
**that** the outer wall (12) being designed as lagging of the casing (10) and having the geometry of a cylinder or multiple-cornered column is limited in its respective front region by a top wall (26) and a bottom wall (24), respectively,
**that** the inner wall is formed by a second inner tube (16) with closed bottom wall (20), and
**that** the top wall (26) of the outer wall (12) and top side front wall (22) of the second inner tube (16) rest planar onto each other and are connected to each another.

3. Arrangement according to claim 1,
**characterized in**
**that** the water inlet and outlet (46, 48), respectively, are each formed by a tube section and a bushing (50, 52), respectively, that is sealed against the space running between the lagging (12) and the second inner tube (16), said space forming the first receptacle (30).

4. Arrangement according to claim 1,
**characterized in**
**that** the separating elements (54, 56) extend along the entire length of the first inner tube (14) and end at a distance to the bottom wall (20) of the second inner tube (16).

5. Arrangement according to at least claim 1,
**characterized in**
**that** respective bottom side front edge of the separating elements (54, 56) ends flush with bottom wall (18) of the first inner tube (14), and
**that** especially the separating elements (54, 56) run with their longitudinal edges at a distance to the inner surface of the second inner tube (16).

6. Arrangement according to at least claim 2,
**characterized in**
**that** the first and the second receptacle (30, 32) are adapted to be filled through openings (36, 38, 40) originating from the top walls (22, 26) of the lagging (12) and the second inner tube (16), respectively, which in turn are adopted to be closed preferably via rivets.

7. Arrangement according to at least claim 1,
**characterized in**
**that** the lagging (12), the first and the second inner tube (14, 16), the projections originating from the inner tube (62, 64, 66, 68), the tube sections (50, 52) limiting the inlet and outlet, the separating elements (54, 56) and/or the rivets are made of stainless-steel, ceramic and/or glass.

8. Arrangement according to at least claim 1,
**characterized in**
**that** areas of the device (10) contacting the water are provided such as coated with a disinfecting material or comprise such a material, especially that the areas of the device (10) contacting the water are provided such as coated with silver or a silver-containing material or comprise silver or a silver-containing material.

9. Arrangement according to at least claim 1,
**characterized in**
**that** areas of the device (10) contacting the water are magnetisable, especially that the areas of the device (10) contacting the water consist of magnetisable material or are coated therewith.

## Revendications

1. Arrangement pour eau vitalisée s'écoulant à travers ledit dispositif comprenant un boîtier (10) avec une entrée et sortie d'eau (46, 48), avec des moyens de turbulence (62, 64, 66, 68) s'étendant le long de la voie d'écoulement entre l'entrée et de sortie, et la voie d'écoulement est limitée au moins en parties par un réceptacle (30, 32) contenant un milieu influant l'eau
**caractérisé par**
que le boîtier (10, 110) est conçu à double parois avec une paroi extérieure et une autre intérieure, que les parois extérieure et intérieure limitent un premier récipient fermé (30) pour le milieu, que la paroi interne limite le trajet d'écoulement,
que la paroi intérieure s'étend coaxialement à un second récipient tubulaire, qui forme un réceptacle fermé pour le fluide et est en forme d'un premier tube interne (14) s'étendant le long de la partie circonférentielle et le côté inférieur espacé de la paroi interne,
que, dès le premier tube interne (14) proviennent des éléments de séparation (54, 56) plats en projection radiale pour séparer en deux compartiments (58, 60), l'espace s'étendant entre le premier tube interne (14) et le second tube interne (16), l'un des compartiments étant relié à l'entrée (46) et l'autre à la sortie (48),
que l'entrée et la sortie sont limitées par un raccord ou une section de tube (50, 52), dont l'axe longitudinal se croise perpendiculairement avec l'axe longitudinale du premier tube intérieur,
que les compartiments sont reliés l'un à l'autre dans la région inférieure distancée de l'entrée et de sortie, et
que du premier tube interne (14) sortent des projections (62, 64, 66, 68) s'étendant dans les compartiments respectifs (58, 60) constituant les moyens de formation des turbulences.

2. Arrangement selon la revendication 1,
**caractérisé par**
que la paroi extérieure (12) étant conçu comme la traîne de l'enveloppe (10) et ayant la géométrie d'un cylindre ou colonne à plusieurs coins est limitée respectivement dans sa région frontale respective par une paroi supérieure (26) et une paroi inférieure (24),
que la paroi interne est constituée d'un second tube interne (16) avec un fond à paroi fermée (20), et
que le côté supérieur (26) de la paroi extérieure (12) et le côté supérieur de la paroi interne (22) du second tube interne (16) se superposent plats l'une sur l'autre et sont reliées l'une à l'autre.

3. Arrangement selon la revendication 1,
**caractérisé par**
que l'entrée et la sortie d'eau (46, 48), respectivement, sont chacune constituées d'une section de tuyau et d'un raccord (50, 52), respectivement, et scellées contre l'espace situé entre l'isolation (12) et le second tube interne (16), formant ledit espace du premier récipient (30).

4. Arrangement selon la revendication 1,
**caractérisé par**
que les éléments de séparation (54, 56) s'étendent sur toute la longueur du premier tube interne (14) et se terminent à une distance de la paroi inférieure (20) du second tube interne (16).

5. Arrangement selon au moins la revendication 1,
**caractérisé par**
que le bord inférieur respectif de la face d'avant de l'arête des éléments de séparation (54, 56) se termine au ras de la paroi de fond (18) du premier tube interne (14), et
que, en particulier les éléments de séparation (54, 56) s'étendent avec leurs bords longitudinaux distancés de la surface interne du deuxième tube interne (16).

6. Arrangement selon au moins la revendication 2,
**caractérisé par**
que le premier et le second récipient (30, 32) sont conçus pour être remplis par des ouvertures (36, 38, 40) issues des parois supérieures (22, 26) de l'isolation (12) et du second tube interne (16), respectivement, qui sont à leur tour conçus à être fermées de préférence par des rivets.

7. Arrangement selon au moins la revendication 1,
**caractérisé par**
que l'isolation (12), le premier et le second tube interne (14, 16), les projections issues du tube interne (62, 64, 66, 68), les sections de tube (50, 52) limitant l'entrée et de sortie, les éléments de séparation (54, 56) et / ou les rivets sont en acier inoxydable, en céramique et / ou en verre.

8. Arrangement selon au moins la revendication 1,
**caractérisé par**
que les zones de l'appareil (10) en contact avec l'eau sont fournis, tels que revêtu d'un matériau de désinfection ou comprenant un tel matériau, en particulier que les zones de l'appareil (10) en contact avec l'eau sont fournis tels que plaquées avec de l'argent ou un matériau contenant de l'argent ou comprenant de l'argent ou un matériau contenant de l'argent.

9. Arrangement selon au moins la revendication 1,
**caractérisé par**
que les zones de l'appareil (10) communiquant avec l'eau sont magnétisables, surtout que les zones de l'appareil (10) en contact avec l'eau se composent d'un matériau magnétisable ou sont plaquées par un tel.
